# EUROPÄISCHE PATENTSCHRIFT

(11) **EP 1 180 496 B1**
(45) Veröffentlichungstag und Bekanntmachung des Hinweises auf die Patenterteilung: **22.10.2003**
(21) Anmeldenummer: 01119218.4
(22) Anmeldetag: 09.08.2001
(51) Int. Cl.: C01B 3/38

(54) **Vorrichtung zur Zuführung von Edukten zu parallelen Räumen**
Device for feeding precursors to parallel spaces
Dispositif pour alimenter des espaces parallèles en réactifs

(30) Priorität: 12.08.2000 DE 10039592
(43) Veröffentlichungstag der Anmeldung: 20.02.2002
(73) Patentinhaber: Ballard Power Systems AG, 73230 Kirchheim/Teck-Nabern (DE)
(72) Erfinder: Cwik, Roland, 86153 Aubsburg (DE); Ebert, Andreas, 73230 Kirchheim (DE); Lamla, Oskar, 73230 Kirchheim-Nabern (DE); Motzet, Bruno, 73235 Weilheim/Teck (DE); Schüssler, Martin, Dr., 89073 Ulm (DE); Stefanovski, Tomas, 71034 Böblingen (DE); Tischler, Alois, 84405 Dorfen (DE); Weisser, Marc, 73277 Owen/Teck (DE)
(74) Vertreter: Beyer, Andreas, Dr.

(56) Entgegenhaltungen:
- EP-A- 0 849 375
- EP-A- 0 878 442
- DE-A- 19 904 398
- PATENT ABSTRACTS OF JAPAN vol. 016, no. 456 (M-1314), 22. September 1992 (1992-09-22) & JP 04 161707 A (NORITZ CORP), 5. Juni 1992 (1992-06-05)
- PATENT ABSTRACTS OF JAPAN vol. 017, no. 237 (M-1408), 13. Mai 1993 (1993-05-13) & JP 04 363509 A (SHARP CORP), 16. Dezember 1992 (1992-12-16)

## Beschreibung

Die vorliegende Erfindung betrifft eine Vorrichtung zur Zuführung von Edukten zu parallelen Räumen gemäß dem Oberbegriff des Anspruchs 1.

Modular aufgebaute sogenannte Stapelreaktoren aus mehreren 'aufeinanderfolgend angeordneten Katalysatorscheiben finden aufgrund ihrer Kompaktheit und ihrer einfach an jede festkörperkatalysierte Reaktion anzupassende Konstruktion immer weitere Verbreitung. Ein besonders wichtiges Einsatzgebiet stellen dabei Brennstoffzellen dar, die insbesondere in Kraftfahrzeugen Verwendung finden können. Dabei wird zuerst Wasserstoff aus einem Gemisch eines Kohlenwasserstoffes, worunter herkömmlicherweise auf diesem Gebiet auch Alkohole, Aldehyde, Ketone und dergleichen fallen, und Wasser gewonnen. Diese Reaktion wird allgemein als Kohlenwasserstoffreformierung bezeichnet (Ullmann's Encyklopädie der technischen Chemie Band 12, S. 113-136, Verlag Chemie, Weinheim 1976). Das vorzugsweise in der Dampfphase vorliegende Gemisch aus dem Kohlenwasserstoff, insbesondere Methanol, und Wasser wird dabei an der Oberfläche eines entsprechenden, zumeist Kupfer enthaltenden Festkörperkatalysators umgesetzt.

Aus der DE 197 20 294 C1 ist ein Reformierungsreaktor bekannt, bei dem das Eduktgemisch über thermisch an die Verdampfungszone gekoppelte Zuleitungsplatten in der Verdampfungszone verdampft und anschließend der Reaktionszone zugeführt wird. Die Zuleitungsplatten sollen dabei nicht näher definierte Kanalstrukturen aufweisen.

Die ältere DE 199 04 398.1 offenbart eine gattungsgemäße Vorrichtung, bei der in einem Kanal das Eduktgemisch über eine beispielsweise mit Düsen versehene, als Doppelrohr ausgebildete Lanze einzelnen Katalysatorschichten (Module) zugeführt wird. Das äußere Rohr der Lanze steht in fester, thermisch leitender Verbindung mit dem Reaktor bzw. den Katalyseschichten.

Nachteilig ist bei beiden vorerwähnten Reaktortypen, daß die dort eingesetzten Eduktverteilsysteme, die Zuleitungsplatte bzw. die Lanze, zu Ungleichverteilungen des Eduktgemisches auf die einzelnen Module des Stapelreaktors führen und auch Druckschwankungen innerhalb des Verteilsystemes nicht ausgleichen können. Außerdem treten in den bekannten Verteilsystemen starke Druckschwankungen durch eine nur teil- bzw. bereichsweise Verdampfung des Eduktgemisches auf, was zu Pulsationen im Verteilsystem und letztlich zu Ungleichverteilungen auf die Module führt. Dies hat zur Folge, daß bei einer katalytischen Reaktion einige Reaktorbereiche übermäßig, andere wieder nicht ausreichend belastet sind, wobei unerwünschte thermische Gradienten innerhalb des Reaktors auftreten. Darunter leidet insgesamt die Effizienz und Reaktionsgeschwindigkeit einer derart geführten festkörperkatalysierten Reaktion.

Aufgabe der vorliegenden Erfindung ist es daher, eine Vorrichtung zu schaffen, die eine gleichmäßige Verteilung des oder der Edukte auf die einzelnen Module unter Vermeidung von Pulsationen im Verteilsystem ermöglicht.

Diese Aufgabe wird durch eine Vorrichtung mit den Merkmalen des Anspruchs 1 gelöst. Demnach ragt jeweils ein Austrittsmittel der Verteilereinheit in eine Raum hinein, und der Siedepunkt des Mediums in der Verteilereinheit liegt oberhalb der Temperatur des Mediums in der Verteilereinheit.

Bevorzugt ist der Strömungswiderstand im Bereich der Austrittsmittel so hoch, daß der Siedepunkt des Mediums im Austrittsmittel höher ist als die Siedepunkt des Mediums im zugeordneten Raum.

Vorzugsweise ist die Verteilereinheit zumindest im Bereich der Austrittsmittel gegenüber den Räumen thermisch entkoppelt. Vorzugsweise weisen die Austrittsmittel bzw. die letzte Verteilerstufe der Verteilereinheit gegenüber der oder den vorhergehenden Bereichen der Verteilereinrichtung einen höheren Strömungswiderstand für durchströmendes Edukt auf.

Bevorzugt wird der höhere Strömungswiderstand durch Mittel erzeugt, die einen Druckverlust bewirken, der auch bei von außen angelegtem Druck beibehalten wird. Dies wird durch Einbauten wie enge, schmale Kapillaren, Kanäle oder Sintermaterialien mit einstellbarer Porosität oder mäandrierenden Strukturen erreicht, deren Strömungswiderstand dem jeweiligen Verteilsystem und einer damit versorgten Vorrichtung, wie einem Reaktor oder Verdampfer, angepaßt sind.

Die thermische Isolierung des Verteilsystems von der Vorrichtung wird bevorzugt dadurch erreicht, daß thermisch nichtleitfähige Mittel oder Mittel mit geringer Wärmeleitung um das Verteilsystem angeordnet sind. Beispiele hierfür können Vakuumkammern, Gas oder thermisch schlechtleitende Keramiken sein. Diese bilden eine Ummantelung, die verhindert, daß die Reaktionswärme der Vorrichtung auf das Verteilsystem übertragen wird, wodurch es zu den vorstehend erwähnten schädlichen Effekten kommt.

Eine weitere bevorzugte Ausgestaltung zur thermischen Isolierung besteht darin, daß Verteilsystem und Verdampferstrukturen in den Räumen beabstandet voneinander angeordnet sind. Damit kann in einfacher und effizienter Weise die Möglichkeit genutzt werden, daß Gas als bekannt schlechter Wärmeleiter zur Isolierung des Verteilsystems verwendet werden kann.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.
- Fig. 1: zeigt eine schematische Darstellung einer Vorrichtung gemäß der Erfindung,
- Fig. 2: zeigt eine schematische Ansicht eines Ausschnitts eines bevorzugten Reaktors gemäß der Erfindung und
- Fig. 3: zeigt eine Gesamtansicht eines bevorzugten Reaktors,
- Fig. 4: zeigt eine schematische Ansicht eines Ausschnitts eines bevorzugten Verdampfers gemäß der Erfindung und
- Fig. 5: zeigt eine Seitenansicht des bevorzugen Verdampfers.

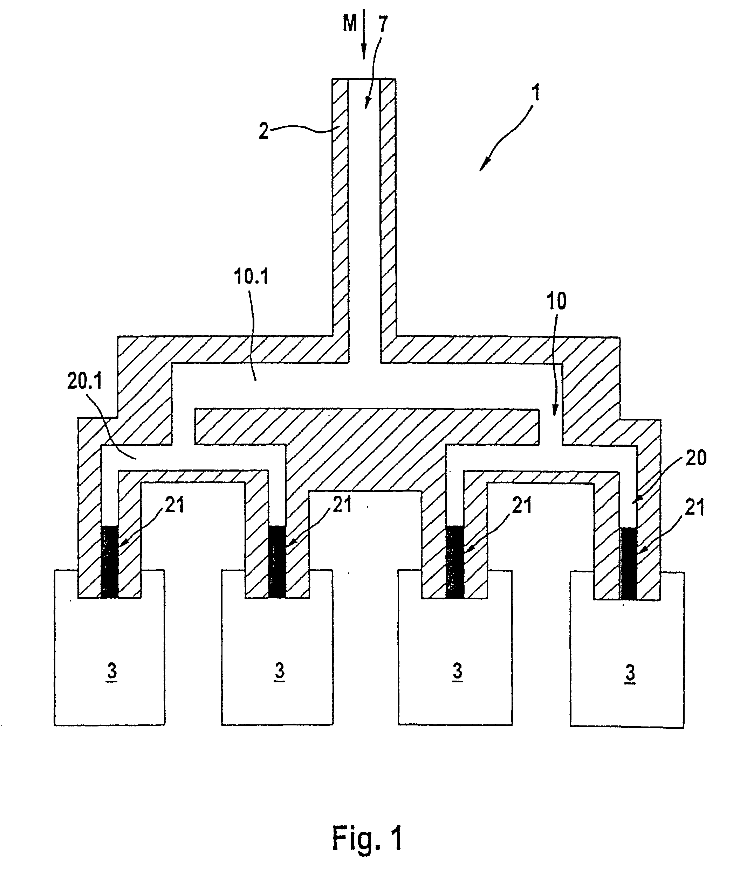

Fig. 1 zeigt eine schematische Darstellung einer Vorrichtung gemäß der Erfindung am Beispiel eines Reaktors. Die Vorrichtung 1 ist zur Zuführung von Medien M zu parallelen, voneinander getrennten Räumen 3 vorgesehen. Mit einer Verteilereinheit 2 wird ein Medium M, z.B. ein Edukt oder ein Eduktgemisch, in flüssiger Form den Räumen 3 zugeführt und in den Räumen 3 durch Verdampferstrukturen verdampft. Die Verdampferstrukturen zum Verdampfen des flüssigen Mediums können z.B. durch die Begrenzungswände der Räume 3 gebildet werden oder auch durch Netze oder ähnliche Oberflächen. Die Verdampferstrukturen können auch katalytisch beschichtet sein. Das verdampfte Medium kann dann von der Verdampferstruktur aus zu einem Reaktionsbereich geleitet werden.

Die Verteilereinheit 2 setzt sich aus einer Zuführvorrichtung 7, 10, 20 zur Zufuhr des Mediums zu den Räumen 3 und Austrittsmitteln 21 zusammen, aus denen das Medium M von der Verteilereinheit 2 aus in die Räume 3 gelangt. Dabei weist die Verteilereinheit 2 eine gemeinsame Zuführeinheit 7 auf, durch die das Medium M in die Verteilereinheit 2 gelangt. In der dargestellten Verteilereinheit 2 sind beispielsweise zwei Verteilerstufen 10, 20 dargestellt, über die der Strömungsweg des Mediums M verzweigt. In der ersten Verteilerstufe 10 wird der Strömungsweg in zwei Teilstücke aufgeteilt, in der zweiten Verteilerstufe 20 wird der Strömungsweg auf insgesamt vier Teilstücke aufgeteilt. Über die letzte Verteilerstufe 20 wird das Medium M gezielt in die einzelnen Räume 3 verteilt.

Jeweils ein Austrittsmittel 21 der Verteilereinheit 2 ist einem einzigen Raum 3 zugeordnet. Die Austrittsmittel 21 ragen jeweils in den zugeordneten Raum 3 hinein. Das Medium M kann so gezielt in den jeweils zugeordneten Raum 3 zudosiert werden. Dabei liegt der Siedepunkt T_{S} des Mediums M in der Verteilereinheit 2 oberhalb der Temperatur des Mediums in der Verteilereinheit 2. Damit ist gewährleistet, daß das Medium nicht in der Verteilereinheit 2 verdampfen kann. Dieses kann durch verschiedene Maßnahmen und Mittel bewirkt werden, die einzeln oder auch in Kombination miteinander angewendet werden können.

Vorzugsweise ist die Verteilereinheit 2 so ausgebildet, daß der Strömungswiderstand oder der Druckverlust in der Verteilereinheit 2 abhängig von einem Temperaturverlauf entlang der Verteilereinheit 2 variiert. Günstigerweise wird die Verteilereinheit 2 so ausgestaltet, daß der Strömungswiderstand oder der Druckverlust in der Verteilereinheit 2 proportional zur Temperatur der Verteilereinheit 2 ansteigt. Der Siedepunkt T_{S} des Mediums M ist dann an der heißesten Stelle der Verteilereinheit 2 am höchsten, so daß gewährleistet ist, daß kein Medium M innerhalb der Verteilereinheit 2 verdampfen kann.

Vorzugsweise weist zumindest die letzte Verteilerstufe 20 einen hohen Strömungswiderstand auf, der zu einem ausreichend hohen Druckabfall im Austrittsmittel führt, so daß der Siedepunkt T_{S} des Mediums M im jeweiligen Austrittsmittel 21 höher ist als die Umgebungstemperatur des Austrittsmittels 21 im jeweiligen Raum 3 bzw. die Temperatur des Mediums M im Austrittsmittel 21. So liegt etwa der Siedepunkt von Methanol bei einem Druck von 5 bar erheblich über dem Siedepunkt bei Normaldruck. Weist das Austrittsmittel 21 einen Druckverlust von 5 bar auf, so ist der Siedepunkt viel höher als der Siedepunkt im zugeordneten Raum 3.

Zweckmäßigerweise sind die Austrittsmittel 21 der Verteilereinheit 2 zumindest gegenüber den Räumen 3 thermisch entkoppelt, vorzugsweise ist die gesamte Verteilereinrichtung 2 gegenüber den Räumen 3 thermisch entkoppelt. Das Austrittsmittel 21 kann in einer bevorzugten Ausführung durch eine Dosierspitze, eine Kapillare oder dergl. gebildet sein, die über eine Verdampferstruktur, etwa die heiße Begrenzungswand, in den Raum 3 ragt und von dieser Verdampferstruktur beabstandet ist. Es besteht keine festkörperwärmeleitende Verbindung zwischen dem Austrittsmittel 21 und dem Raum 3 bzw. der Verdampferstruktur des Raums 3. Das Medium wird in den Raum 3 eingespritzt, verdampft auf der Begrenzungswand des Raums und wird als Dampf weiter transportiert. Vorteilhafterweise sind die Austrittsmittel 21 im wesentlichen gleichartig ausgebildet.

Der besondere Vorteil ist, daß derart eine gute Gleichverteilung der Edukte oder des Eduktgemischs in den einzelnen Räumen 3 erzielt wird. Durch die thermische Entkopplung der Verteilereinrichtung 2 bzw. der Austrittsmittel 21 gegenüber den Räumen 3 wird verhindert, daß das Medium M bereits in der Verteilereinrichtung erhitzt und verdampft wird und eine Dampfbildung dann zu unerwünschten Pulsationen führt, welche die Gleichverteilung der Edukte stören könnte. Damit ist eine hochgenaue Dosierung des Mediums M möglich, so daß die Prozesse in den Räumen 3 sehr homogen ablaufen können. Dies ist besonders vorteilhaft in Verdampfern oder Reaktoren, die in Plattenbauweise oder Rohrbündelform ausgeführt und die in Systemen eingesetzt werden, in denen möglichst homogene Betriebsbedingungen erwünscht sind, etwa in Brennstoffzellensystemen.

Es können auch mehr als zwei Verteilerstufen 10, 20 in der Vorrichtung vorgesehen sein, zumindest ist jedoch eine Verteilerstufe 10 vorgesehen. Vorzugsweise ist der Strömungswiderstand der letzten Verteilerstufe 10 mit den Austrittsmitteln 21 mindestens um einen Faktor zehn größer ist als der Strömungswiderstand im Medienströmungsweg der vorangegangenen Verteilerstufen 10 mit der gemeinsamen Zuführung 7. So ist etwa der Strömungswiderstand der letzten Verteilerstufe 20 mit dem Austrittsmittel 24 um mindestens einen Faktor 3, bevorzugt einen Faktor 10 größer als der Strömungswiderstand des Mediums M im Medienströmungsweg, der sich aus den Teilstücken 7, 10.1, 20.1 zusammensetzt.

Bevorzugt weicht der Strömungswiderstand zwischen verschiedenen Austrittsmitteln 21 der Verteilereinheit 2 um höchstens 20 %, bevorzugt höchstens 5% von einem Mittelwert des Strömungswiderstands der letzten Verteilerstufe mit den Austrittsmitteln 21 ab. Damit gelingt eine gute Gleichverteilung des Mediums in die verschiedenen Räume 3. Zur Erzeugung des höheren Strömungswiderstands sind zweckmäßigerweise Mittel zum Bewirken eines Druckverlusts vorgesehen, wobei die Mittel zum Bewirken eines Strömungswiderstands oder eines Druckverlusts aus 'Kapillaren, Kanalstrukturen und gesinterten, porösen Werkstoffen ausgewählt sind.

Neben der Möglichkeit, die Verteilereinrichtung 2, bevorzugt zumindest die Austrittsmittel 21 thermisch zu entkoppeln, indem diese nicht festkörperwärmeleitend mit den Wänden des Reaktors bzw. Verdampfers verbunden sind, besteht die Möglichkeit der thermischen Entkopplung auch darin, thermisch nicht leitfähige bzw. isolierende Mittel zumindest bereichsweise um die Verteilereinrichtung 2 anzuordnen. Ebenso ist es möglich, Kühleinrichtungen vorzusehen.

Ein höherer Strömungswiderstand der letzten Verteilerstufe 20 gegenüber dem Strömungswiderstand vor der letzten Verteilerstufe 20 bewirkt, daß unterschiedliche Strömungswiderstände der vorhergehenden Verteilerstufen 10 und/oder Zuführungen 7, wie sie oftmals bei unterschiedlichen Größenverhältnissen der Zuführungsteilstücke zueinander auftreten oder auch durch Fertigungstoleranzen hervorgerufen werden, vernachlässigt werden können. Dadurch gelangt in jeden Raum 3 in etwa eine gleich große Menge Flüssigkeit M.

Durch die thermische Entkopplung der Verteilereinheit 2 zumindest im Bereich der Austrittsmittel 21 wird gewährleistet, daß die aus der Verdampfung der Edukte in der Verdampfungszone freiwerdende thermische Energie nicht zur bereichsweisen oder sogar gänzlichen Verdampfung des oder der Edukte in der Verteilereinrichtung 2 genutzt werden kann, wodurch in einfacher Weise Druckstöße und/oder übermäßige Druckzunahmen durch die Eduktverdampfung in der Verteilereinrichtung 2 vermieden werden können. Vorzugsweise ist die gesamte Verteilereinheit 2 thermisch von der Vorrichtung 1 entkoppelt.

In einer bevorzugten Ausführung wird die Vorrichtung 1 als Stapelreaktor verwendet, in den ein Verdampfer integriert ist und der zur Durchführung einer festkörperkatalysierten Reaktion mit aufeinanderfolgend angeordneten Katalysatorscheiben ausgebildet ist.

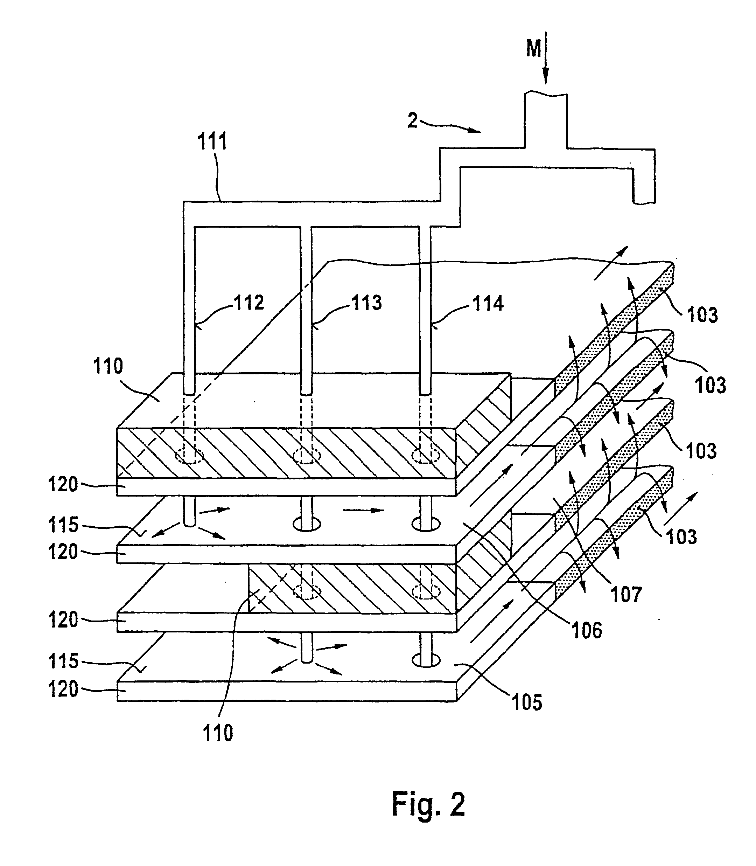

Fig. 2 zeigt einen Ausschnitt aus einem derartigen bevorzugten Stapelreaktor, der das Prinzip des Reaktors verdeutlichen soll. Der Reaktor weist eine Anzahl aufeinandergestapelter Flächen 120 auf. Die Flächen 120 sind voneinander beabstandet und bilden Räume. Wandbegrenzungen sind der Übersichtlichkeit wegen nicht dargestellt. Die Flächen 120 sind durchbrochen und so übereinander gestapelt, daß sich fluchtende Kanäle bilden, in die Austrittsmittel 112, 113, 114 der letzten Verteilerstufe 111 der Verteilereinheit 2 hineinragen. Die Austrittsmittel 112, 113, 114 sind als dünne Röhren ausgebildet, die von den Reaktorwänden beabstandet sind. Die Austrittsmittel 112, 113, 114 enden in verschiedenen Räumen des Reaktors, von denen zwei Räume 105, 106 beispielhaft dargestellt sind.

In den Bereichen um die Austrittsmittel 112, 113, 114 ist jeweils eine Verdampfungszone 115 in oder auf den Flächen 120 vorgesehen. Aus den Austrittsmitteln austretende Flüssigkeit wird dort vollständig verdampft. Angrenzend an die Verdampfungszonen 115 folgt eine Reaktionszone mit Katalysatorscheiben 103, welche für das verdampfte Medium durchlässig sind, wobei das Medium katalytisch dort umgesetzt wird. Das durch die Katalysatorscheiben 103 durchtretende Medium wird in einem Sammelkanal 107 aus der Reaktorzone weggeleitet. Dies ist durch Pfeile angedeutet. Zwischen jenen beiden Flächen 120, welche den Sammelkanal 107 und/oder andere, vergleichbare Sammelkanäle begrenzen, ist eine Abdichtung 110 vorgesehen, welche verhindert, daß verdampftes Medium anstatt durch die Katalysatorscheibe 103 in den Sammelkanal zu gelangen, durch den Kanal in den Sammelkanal 107 oder die Sammelkanäle gelangt.

Der Verdampfungsbereich 115 kann je nach Reaktortyp anders ausgestaltet sein. Die Wahl des Verdampfers hängt jedoch von der durchzuführenden Reaktion und dem Reaktordesign ab und ist daher im Rahmen der vorliegenden Erfindung beliebig.

Der bevorzugte Stapelreaktor wird beispielsweise als autothermer Reformierungsreaktor zur Gewinnung von Wasserstoff aus Kohlenwasserstoffen und Wasser, beispielsweise in mobilen Brennstoffzellensystemen verwendet, bei dem ein Brennmittel wie etwa Methanol oder sonstige Alkohole, Ether oder Kohlenwasserstoffe, mit hoher Dosiergenauigkeit verdampft werden müssen.

Eine andere, nicht dargestellte Ausführungsform des bevorzugten Stapelreaktors ist beispielsweise derjenigen nachempfunden, die in der EP 0 906 890 A1 beschrieben ist, wobei auf jede Katalysatorscheibe ein oder mehrere Austrittsmittel als entsprechend erfindungsgemäß ausgestaltetes Verteilersystem führen

In einer weiteren bevorzugten Ausführung wird die Vorrichtung gemäß Fig. 2 als Verdampfer verwendet. In diesem Fall sind keine Reaktionszonen mit Katalysatorscheiben 103 angrenzend an die Verdampfungszonen 115 vorgesehen, sondern der Dampf wird über einen oder mehrere Sammelkanäle 107 aus dem Verdampfer weggeleitet. In diesem Fall ist auch eine Maßnahme zur Abdichtung wie mit Abdichtungsmitteln 110 nicht notwendig, sondern es kann vorteilhaft ausgenutzt werden, daß ein Ausgleich der Dampfmengen in den einzelnen Räumen 105, 106 über die Durchbrüche in den Flächen 120 um die Austrittsmittel 112, 113, 114 stattfinden kann.

'Die erfindungsgemäße Vorrichtung kann auch bevorzugt in gasbeheizten Gegenstromverdampfern eingesetzt werden. Ein weiteres bevorzugtes Einsatzgebiet stellen Reaktoren dar, in denen eine Reaktion mit großer Volumen- oder Molzunahme durch entstehende Produkte durchgeführt wird.

Die Räume 3, 105, 106 der Vorrichtung können durch Platten, Scheiben oder durch Rohre gebildet werden, wobei bei einer Mehrzahl von Platten, Scheiben oder Rohren jeweils ein Austrittsmittel 21, 112, 113, 114 einem Raum 3, 105, 106 zugeordnet ist, in die dieses hineinragt.

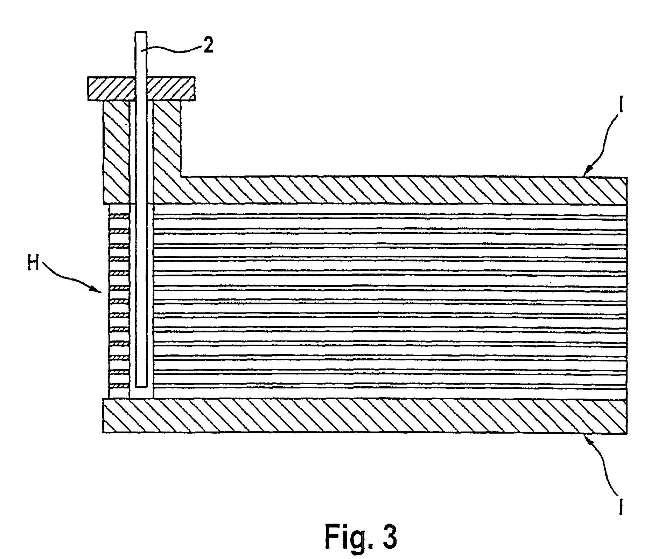

In Fig. 3 ist eine schematische Gesamtansicht des bevorzugten Reaktors bzw. Verdampfers der Fig. 2 dargestellt. Der Reaktor mit Flächen 120, Räumen 105, 106 und Verdampfungszone und/oder Reaktionszone mit Katalysatorscheiben 103 ist insgesamt in der Zone H angeordnet. Zur Atmosphäre hin wird die Zone H mit Isolierplatten I abgeschlossen, welche den Reaktor bzw. den Verdampfer gegen die Außenwelt isolieren soll. Durch eine dieser Isolierscheiben I wird die Verteilereinrichtung 2 geführt und mit dem Gehäuse gasdicht verschraubt.

Die verschiedenen Verteilerstufen der Verteilereinheit 2 können sowohl innerhalb als auch außerhalb der Isolierscheiben I angeordnet sein.

Günstig ist die Verwendung der Vorrichtung in Verdampfern.

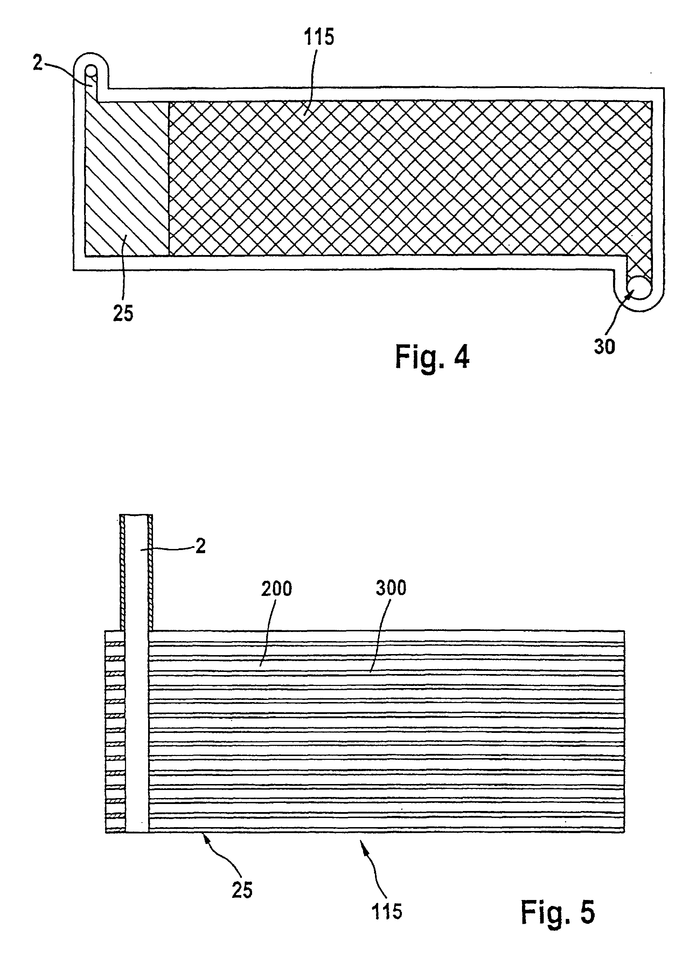

In Fig. 4 und Fig. 5 ist ein bevorzugter Verdampfer dargestellt. Dieser kann als medienbeheizter Gegenstromverdampfer oder auch als Gleichstromverdampfer ausgeführt sein.

Fig. 4 zeigt eine Draufsicht auf einen Raum 200 eines bevorzugten gasbeheizten Gegenstromverdampfers. Die Verteilereinheit 2 endet mit ihrer vorletzten Verteilerstufe am Eingang zum Austrittsmittel 25 des Raums 200. Dies kann insbesondere eine mäanderförmige Kanalstruktur in einer Platte des Plattenverdampfers sein. Das Medium M gelangt in diese Kanalstruktur des Austrittsmittels 25. Der Strömungswiderstand und der damit verbundene Druckverlust ist sehr hoch, so daß der Siedepunkt des Mediums stark erhöht wird. Das Medium M gelangt flüssig in den Verdampferbereich 115, welcher einen geringeren Strömungswiderstand hat und wird dort verdampft. Der Dampf gelangt dann in die Sammlerstruktur 30 und wird von dort aus dem Verdampfer weggeführt.

Angrenzend zu diesem Raum 200 ist ein weiterer Kanal 300 parallel zu Raum 200 vorgesehen, in dem das Heizmedium strömt. Bei einem bevorzugten Gegenstromverdampfer ist das Heizmedium, etwa ein Heizgas oder Öl oder dergleichen, im Bereich der Sammlerstruktur 30 am heißesten und kühlt in Richtung Austrittsmittel 25 ab. Vorteilhaft ist, wenn die Bedingungen der Kanäle 200 und 300 so aufeinander abgestimmt sind, daß die Temperatur des Heizmediums im Bereich der Verdampfungszone 115 der Siedetemperatur des Mediums M in dieser Zone entspricht und spätestens am Übergang zum Austrittsmittel 25 stromab dann diese Temperatur unterschreitet. Die Temperatur des Heizmediums ist dann zwar immer noch relativ hoch, aber der Energieinhalt reicht nicht mehr aus, um das Medium M zu verdampfen, zumal dieses im Austrittsmittel 25 noch einen höheren Siedepunkt hat als im Bereich der Verdampfungszone 115.

In Fig. 5 ist eine Seitenansicht des bevorzugten Verdampfers in Plattenbauweise gezeigt. Das Medium M wird mittels der Verteilereinheit 2 den Austrittsmitteln 25 zugeführt. Aus dem Bereich der Austrittsmittel 25 gelangt das flüssige Medium M in den Verdampfungsbereich 115 und wird dort verdampft. Räume 200, in denen das Medium M verdampft wird, wechseln dabei mit 'Räumen 300, in denen das Heizmedium geführt wird, ab.

Zweckmäßig ist, wenn der Strömungswiderstand der Austrittsmittel 25 höher ist als der Strömungswiderstand der Räume, welche im Reaktor bzw. im Verdampfer stromab auf das Austrittsmittel folgen. Günstigerweise ist der Strömungswiderstand mindestens zweimal so groß, bevorzugt mindestens dreimal so groß, besonders bevorzugt mindestens zehnmal so groß.

Besonders vorteilhaft ist die Verwendung der Vorrichtung als Plattenreaktor in einem Brennstoffzellensystem. Eine weitere besonders vorteilhafte Verwendung der Vorrichtung ist deren Verwendung als Verdampfer in einem Brennstoffzellensystem.

## Patentansprüche

1. Vorrichtung (1) zur Zuführung von Edukten zu parallelen, voneinander getrennten Räumen (3, 106) mit einer Verteilereinheit (2), wobei Austrittsmittel (21, 112, 113, 114) der Verteilereinheit (2) den Räumen (3, 105, 106) zugeordnet sind, und wobei Verdampferstrukturen (115) zum Verdampfen flüssiger Medien in den Räumen (3, 105, 106) vorgesehen sind,
**dadurch gekennzeichnet,**
**daß** jeweils ein Austrittsmittel (21, 25, 112, 113, 114) der Verteilereinheit (2) in einen Raum (3, 105, 106, 200) hineinragt und an jeder Stelle in der Verteilereinheit (2) der Siedepunkt (T_{S}) des Mediums oberhalb der Temperatur des Mediums in der Verteilereinheit (2) liegt.

2. Vorrichtung nach Anspruch 1,
**dadurch gekennzeichnet,**
**daß** die Verteilereinheit (2) so ausgebildet ist, daß der Strömungswiderstand oder der Druckverlust in der Verteilereinheit (2) abhängig von einem Temperaturverlauf entlang der Verteilereinheit (2) variiert.

3. Vorrichtung nach Anspruch 1,
**dadurch gekennzeichnet,**
**daß** der Strömungswiderstand oder der Druckverlust in der Verteilereinheit (2) proportional zur Temperatur der Verteilereinheit (2) ansteigt.

4. Vorrichtung nach Anspruch 1,
**dadurch gekennzeichnet,**
**daß** zumindest die letzte Verteilerstufe (20, 111) einen Strömungswiderstand aufweist, der so hoch ist, daß der Siedepunkt (T_{S}) im jeweiligen Austrittsmittel (21, 25, 112, 113, 114) höher ist als die Umgebungstemperatur des Austrittsmittels (21, 25, 112, 113, 114) im jeweiligen Raum (3, 105, 106, 200).

5. Vorrichtung nach Anspruch 1,
**dadurch gekennzeichnet,**
**daß** der Siedepunkt (T_{S}) des Mediums (M) an der heißesten Stelle der Verteilereinheit (2) am höchsten ist.

6. Vorrichtung nach Anspruch 1,
**dadurch gekennzeichnet,**
**daß** die Verteilereinheit (2) zumindest im Bereich der Austrittsmittel (21, 25, 112, 113, 114) gegenüber den Räumen (3, 105, 106, 200) thermisch entkoppelt ist.

7. Vorrichtung nach Anspruch 1,
**dadurch gekennzeichnet,**
**daß** die Verteilereinheit (2) zumindest im Bereich der Austrittsmittel (21, 25, 112, 113, 114) gegenüber den Räumen (3, 105, 106, 200) gekühlt ist.

8. Vorrichtung nach Anspruch 1,
**dadurch gekennzeichnet,**
**daß** die Medien mehreren Räume (3, 105, 106, 200) über eine gemeinsame Zuführeinheit (7) zuführbar ist.

9. Vorrichtung nach Anspruch 1,
**dadurch gekennzeichnet,**
**daß** die Verteilereinheit (2) zumindest eine Verteilerstufe (10, 20, 111) aufweist, über die die Medien von der gemeinsamen Zuführeinheit (7) in die Räume (3, 105, 106, 200) verteilbar ist.

10. Vorrichtung nach Anspruch 1,
**dadurch gekennzeichnet,**
**daß** der Strömungswiderstand der letzten Verteilerstufe (20, 111) um mindestens einen Faktor 3 größer ist als der Strömungswiderstand der Verteilereinheit (2) vor der letzten Verteilerstufe (20, 111).

11. Vorrichtung nach Anspruch 4,
**dadurch gekennzeichnet,**
**daß** der Strömungswiderstand zwischen verschiedenen Austrittsmitteln (21, 25, 112, 113, 114) der letzten Verteilerstufe (20, 111) um höchstens 20 % von einem Mittelwert des Strömungswiderstands der Austrittsmittel (21, 112, 113, 114, 200) abweicht.

12. Vorrichtung nach Anspruch 4,
**dadurch gekennzeichnet,**
**daß** zur Erzeugung des höheren Strömungswiderstands Mittel zum Bewirken eines Druckverlusts vorgesehen sind, welche aus Kapillaren, Kanalstrukturen, Mäanderstrukturen und gesinterten, porösen Werkstoffen ausgewählt sind.

13. Vorrichtung nach einem der vorhergehenden Ansprüche,
**dadurch gekennzeichnet,**
**daß** der Strömungswiderstand im Austrittsmittel (21, 22, 112, 113, 114) höher ist als in stromab liegenden Räumen der Vorrichtung.

14. Vorrichtung nach einem der vorhergehenden Ansprüche,
**dadurch gekennzeichnet,**
**daß** thermisch isolierende Mittel zumindest bereichsweise um die Verteilereinheit (2) angeordnet sind.

15. Vorrichtung nach Anspruch 1,
**dadurch gekennzeichnet,**
**daß** die Räume (3, 105, 106, 200) durch Rohre gebildet werden, wobei bei einer Mehrzahl von Rohren jeweils ein Austrittsmittel (21, 25, 112, 113, 114) in ein Rohr hineinragt.

16. Verwendung der Vorrichtung nach Anspruch 1 als Plattenreaktor.

17. Verwendung der Vorrichtung nach Anspruch 1 als Verdampfer in Plattenbauweise.

18. Verwendung der Vorrichtung nach Anspruch 1 in einem Brennstoffzellensystem.

## Claims

1. Device (1) for feeding educts to parallel spaces (3, 106) separated from one another, by means of a distributor unit (2), outlet means (21, 112, 113, 114) of the distributor unit (2) being assigned to the spaces (3, 105, 106), and evaporator structures (115) for the evaporation of liquid media being provided in the spaces (3, 105, 106), **characterized in that** in each case an outlet means (21, 25, 112, 113, 114) of the distributor unit (2) projects into a space (3, 105, 106, 200), and, at each point of the distributor unit (2), the boiling point Tₛ of the medium is above the temperature of the medium in the distributor unit (2).

2. Device according to Claim 1, **characterized in that** the distributor unit (2) is designed in such a way that the flow resistance or pressure loss in the distributor unit (2) varies as a function of a temperature profile along the distributor unit (2).

3. Device according to Claim 1, **characterized in that** the flow resistance or pressure loss in the distributor unit (2) rises in proportion to the temperature of the distributor unit (2).

4. Device according to Claim 1, **characterized in that** at least the last distributor stage (20, 111) has a flow resistance which is so high that the boiling point (Tₛ) in the respective outlet means (21, 25, 112, 113, 114) is higher than the ambient temperature of the outlet means (21, 25, 112, 113, 114) in the respective space (3, 105, 106, 200).

5. Device according to Claim 1, **characterized in that** the boiling point (Tₛ) of the medium (M) is highest at the hottest point of the distributor unit (2).

6. Device according to Claim 1, **characterized in that** the distributor unit (2) is thermally uncoupled in relation to the spaces (3, 105, 106, 200), at least in the region of the outlet means (21, 25, 112, 113, 114).

7. Device according to Claim 1, **characterized in that** the distributor unit (2) is cooled in relation to the spaces (3, 105, 106, 200), at least in the region of the outlet means (21, 25, 112, 113, 114).

8. Device according to Claim 1, **characterized in that** the media can be fed to a plurality of spaces (3, 105, 106, 200) via a common feed unit (7) .

9. Device according to Claim 1, **characterized in that** the distributor unit (2) has at least one distributor stage (10, 20, 111), via which the media can be distributed into the spaces (3, 105, 106, 200) from the common feed unit (7).

10. Device according to Claim 1, **characterized in that** the flow resistance of the last distributor stage (20, 111) is higher by at least a factor 3 than the flow resistance of the distributor unit (2) upstream of the last distributor stage (20, 111).

11. Device according to Claim 4, **characterized in that** the flow resistance between different outlet means (21, 25, 112, 113, 114) of the last distributor stage (20, 111) deviates by at most 20% from an average value of the flow resistance of the outlet means (21, 112, 113, 114, 200).

12. Device according to Claim 4, **characterized in that**, to generate the higher flow resistance, means for bringing about a pressure loss are provided, which are selected from capillaries, duct structures, meander structures and sintered porous materials.

13. Device according to one of the preceding claims, **characterized in that** the flow resistance is higher in the outlet means (21, 22, 112, 113, 114) than in the downstream spaces of the device.

14. Device according to one of the preceding claims, **characterized in that** thermally insulating means are arranged at least regionally around the distributor unit (2).

15. Device according to Claim 1, **characterized in that** the spaces (3, 105, 106, 200) are formed by tubes, and, if there is a plurality of tubes, in each case one outlet means (21, 25, 112, 113, 114) projects into a tube.

16. Use of the device according to Claim 1 as a plate reactor.

17. Use of the device according to Claim 1 as an evaporator in a plate form of construction.

18. Use of the device according to Claim 1 in a fuel-cell system.

## Revendications

1. Dispositif (1) pour alimenter en éduits des espaces parallèles séparés l'un de l'autre (3, 106), muni d'une unité de distribution (2), des moyens d'évacuation (21, 112, 113, 114) de l'unité de distribution (2) étant associés aux espaces (3, 105, 106), et des structures d'évaporation (115) pour l'évaporation de milieux liquides dans les espaces (3, 105, 106) étant prévus,
**caractérisé en ce que**
un moyen d'évacuation (21, 25, 112, 113, 114) de l'unité de distribution (2) plonge à chaque fois dans un espace (3, 105, 106, 200) et le point d'ébullition (Tₛ) du milieu est, à tout endroit de l'unité de distribution (2), supérieur à la température du milieu dans l'unité de distribution (2).

2. Dispositif selon la revendication 1,
**caractérisé en ce que**
l'unité de distribution (2) est conçue de sorte telle que la résistance d'écoulement ou la perte de pression dans l'unité de distribution (2) varie en fonction d'un profil de température le long de l'unité de distribution (2).

3. Dispositif selon la revendication 1,
**caractérisé en ce que**
la résistance d'écoulement ou la perte de pression dans l'unité de distribution (2) augmente proportionnellement à la température de l'unité de distribution (2).

4. Dispositif selon la revendication 1,
**caractérisé en ce que**
au moins le demier étage de distribution (20, 111) présente une résistance d'écoulement laquelle est si élevée que le point d'ébullition (Tₛ) dans le moyen d'évacuation concerné (21, 25, 112, 113, 114) est supérieur à la température d'environnement du moyen d'évacuation (21, 25, 112, 113, 114) dans l'espace correspondant (3, 105, 106, 200).

5. Dispositif selon la revendication 1,
**caractérisé en ce que**
le point d'ébullition (Tₛ) du milieu (M) est au plus haut à l'endroit le plus chaud de l'unité de distribution (2).

6. Dispositif selon la revendication 1,
**caractérisé en ce que**
l'unité de distribution (2) est, au moins dans la zone des moyens d'évacuation (21, 25, 112, 113, 114), thermiquement découplée par rapport aux espaces (3, 105, 106, 200).

7. Dispositif selon la revendication 1,
**caractérisé en ce que**
l'unité de distribution (2) est, au moins dans la zone des moyens d'évacuation (21, 25, 112, 113, 114) refroidie par rapport aux espaces (3, 105, 106, 200).

8. Dispositif selon la revendication 1,
**caractérisé en ce que**
les milieux de plusieurs espaces (3, 105, 106, 200) peuvent être amenés par une unité d'alimentation (7) commune.

9. Dispositif selon la revendication 1,
**caractérisé en ce que**
l'unité de distribution (2) présente au moins un étage de distribution (10, 20, 111) à l'aide duquel il est possible de distribuer les milieux dans les espaces (3, 105, 106, 200) à partir de l'unité d'alimentation (7) commune.

10. Dispositif selon la revendication 1,
**caractérisé en ce que**
la résistance d'écoulement du demier étage de distribution (20, 111) est au moins 3 fois plus grande que la résistance d'écoulement de l'unité de distribution (2) en amont du dernier étage de distribution (20, 111).

11. Dispositif selon la revendication 4,
**caractérisé en ce que**
la résistance d'écoulement entre les différents moyens d'évacuation (21, 25, 112, 113, 114) du dernier étage de distribution (20, 111) dévie de 20% maximum dune valeur moyenne de la résistance d'écoulement des moyens d'évacuation (21, 112, 113, 114, 200).

12. Dispositif selon la revendication 4,
**caractérisé en ce que**
il est, en vue de l'obtention de la plus grande résistance d'écoulement, prévu des moyens permettant une perte de pression, lesquels sont sélectionnés parmi des capillaires, des structures à canaux, des structures méandreuses et des matériaux poreux frittés.

13. Dispositif selon l'une des revendications précédentes,
**caractérisé en ce que**
la résistance d'écoulement dans le moyen d'évacuation (21, 22, 112, 113, 114) est plus élevée que dans les espaces du dispositif situés en aval.

14. Dispositif selon l'une des revendications précédentes,
**caractérisé en ce que**
des moyens thermiquement isolants sont, au moins en partie, disposés autour de l'unité de distribution (2).

15. Dispositif selon la revendication 1,
**caractérisé en ce que**
les espaces (3, 105, 106, 200) sont formés par des tubes, un moyen d'évacuation (21, 25, 112, 113, 114) plongeant à chaque fois dans un tube, en présence d'une pluralité de tubes.

16. Utilisation du dispositif selon la revendication 1 comme réacteur à empilements.

17. Utilisation du dispositif selon la revendication 1 comme évaporateur de type à empilements.

18. Utilisation du dispositif selon la revendication 1 dans un système à piles à combustible.
